# FASCICULE DE BREVET EUROPEEN

(11) **EP 0 616 110 B1**
(45) Date de publication et mention de la délivrance du brevet: **22.05.1996**
(21) Numéro de dépôt: 94400451.4
(22) Date de dépôt: 03.03.1994
(51) Int. Cl.: F01D 5/26

(54) **Etage d'aubes libres à une extrémité**
Schaufelnstufe mit freien Schaufelnenden
Row of blades unsupported at one end

(30) Priorité: 03.03.1993 FR 9302431
(43) Date de publication de la demande: 21.09.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Cordier, Jean-Christophe Marc Jacques Marie, F-75011 Paris (FR)

(56) Documents cités:
- EP-A- 0 017 306
- FR-A- 2 330 276
- GB-A- 660 383
- GB-A- 777 955
- US-A- 2 772 854
- US-A- 3 104 093

## Description

L'invention concerne un étage d'aubes libres à une extrémité.

De telles aubes, comme décrit par exemple dans le document US-A-3 104 093, appelées également en porte-à-faux, s'opposent aux aubes dont les extrémités sont réunies entre elles par un anneau de maintien. Cette dernière conception est désavantageuse en ce que l'anneau de maintien est pesant et ne doit pas encombrer la veine d'écoulement des gaz que les aubes occupent, ce qui implique qu'il est logé dans un creux annulaire de la pièce adjacente, généralement un rotor, de délimitation de la veine qui prend donc une forme plus compliquée. Mais les aubes en porte-à-faux ont quant à elles l'inconvénient de fléchir beaucoup plus facilement et donc de vibrer pendant le fonctionnement de la machine dont elles font partie, pour des causes permanentes comme les caractéristiques de l'écoulement des gaz ou accidentelles comme le passage d'un corps étranger tel qu'un volatile. Les vibrations affectent le fonctionnement et le rendement et peuvent même détruire les aubes. C'est pourquoi on a proposé de fixer plus solidement les aubes en les prolongeant à leur portion de base, encastrée dans un anneau de délimitation de la veine d'écoulement, au-delà de cet anneau et en les encastrant dans un second anneau concentrique au premier ou en noyant la portion de base située au-delà de l'anneau dans un matériau amortissant.

L'invention est relative à une conception quelque peu différente dans laquelle la portion de base, prolongée au-delà de l'anneau d'encastrement ou de fixation, est terminée par un patin frottant sur une surface de virole concentrique à l'anneau.

On obtient ainsi un montage sans rigidité excessive où les vibrations sont fortement amorties par le frottement du patin sur la surface de virole.

L'invention va maintenant être décrite par certaines de ses réalisations à l'aide des figures suivantes annexées à titre illustratif et non limitatif :
- la figure 1 est une vue axiale d'un compresseur,
- la figure 2 illustre le fonctionnement de l'invention,
- la figure 3 représente une autre réalisation de l'invention,
- et les figures 4A à 4E représentent cinq autres réalisations de l'invention.

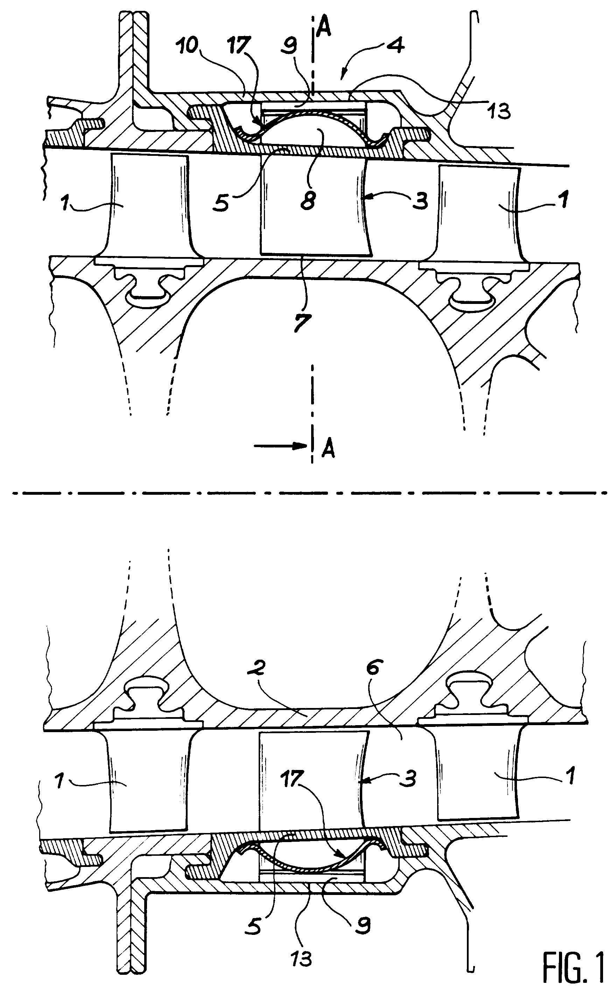

On envisage d'utiliser l'invention avant tout pour les aubes fixes de redressement de turbomachines telles que des compresseurs (figure 1). Ces aubes 3 de redressement sont disposées en étages circulaires qui alternent avec des étages d'aubes 1 fixés à un rotor 2. Elles sont fixées à un stator 4 par une portion de base, radialement extérieure, et sont encastrées dans un anneau 5 commun à chaque étage en étant glissées dans des fentes de l'anneau 5 puis soudées, brasées ou fixées à lui par un autre moyen. Elles s'étendent dans la veine 6 d'écoulement des gaz presque jusqu'au rotor 2, qui est lisse et cylindrique devant elles, forme avantageuse pour la fabrication ; et elles se terminent plus précisément par une arête libre 7.

L'encastrement des aubes 3 dans l'anneau 5 est cependant insuffisant pour réduire suffisamment les vibrations, d'autant moins que l'anneau 5 est mince et relativement peu rigide. Les aubes 3 peuvent facilement fléchir dans la direction de circonférence de l'étage selon des modes où le point d'encastrement est un noeud de vibration. C'est pourquoi les aubes 3 comprennent une portion de base 8, à l'opposé de l'extrémité libre 7, qui est prolongée vers l'extérieur au-delà de l'anneau 5 et se termine par un patin 9 qui frotte sur une virole 10 qui appartient au stator 4 et qui est solidaire de l'anneau 5 qu'elle entoure avec un espace radial assez important. La virole 10 coïncide avantageusement avec l'enveloppe extérieure du stator 4, comme ici.

Les surfaces de frottement 13 du patin 9, de la virole 10 ou des deux peuvent être recouvertes d'un revêtement destiné à abaisser leur coefficient de frottement pour éviter tout grippage. Du bisulfure de molybdène peut être préconisé.

Un résultat semblable est atteint si les surfaces de frottement 13 sont usinées à une faible rugosité. L'effort de frottement dépend encore de l'effort de matage sur les surfaces de frottement 13, qu'il est possible de calculer avec une bonne précision à partir du jeu qui les sépare au repos et des dilatations thermiques que les pièces subissent. Comme les aubes 3 sont exposées directement à la chaleur des gaz, elles se dilatent bien plus que la virole 10.

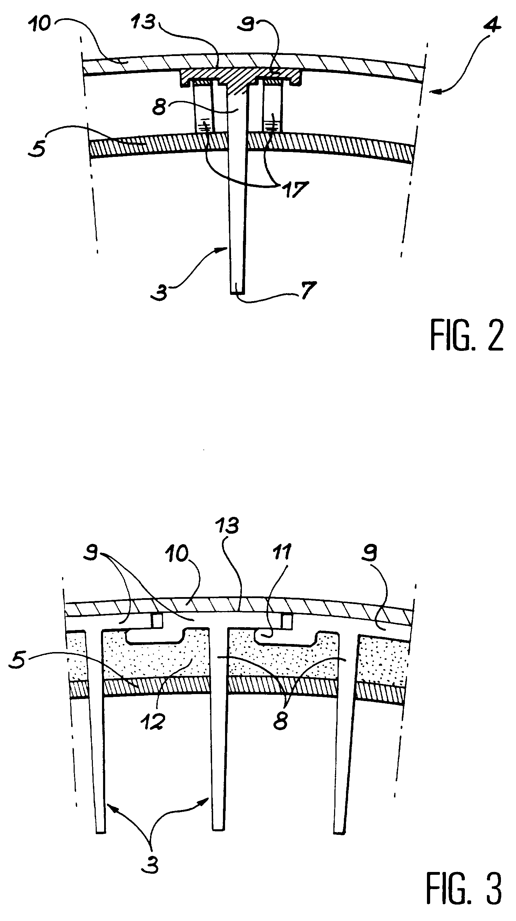

L'appui du patin 9 sur la virole 10 peut être aussi obtenu par un dispositif mécanique comme un ressort ou une lame élastique 17 comme représentée aux figures 1 et 2.

En général, les patins 9 sont forgés avec les aubes 3 et donc d'une pièce avec elles.

L'invention a comme avantages essentiels de n'alourdir que peu la machine et de ne pas exiger de modification de la veine 6 d'écoulement des gaz.

Les figures 1 et 2 illustrent que les patins 9 sont des plaques en forme d'arc de cercle proche d'un rectangle dont deux côtés sont égaux à la largeur des aubes 3 et dont les deux autres côtés, orientés dans le sens d'épaisseur des aubes 3, correspondent à un élargissement important de ces dernières.

Les patins 9 sont séparés les uns des autres par de petits intervalles, comme on le voit bien à la figure 3, où les patins 9 sont de plus complétés à une extrémité latérale par des replis 11 latéraux qui sont des portions destinées à recouvrir les extrémités opposées des patins 9 voisins en frottant également sur elles, ce qui augmente l'amortissement total tout en offrant une interférence directe entre les aubes 3, ce qui égalise leurs mouvements.

L'espace 12 du stator 4 compris entre l'anneau 5 et la virole 10 peut être rempli de matériau amortissant qui complète l'action du frottement.

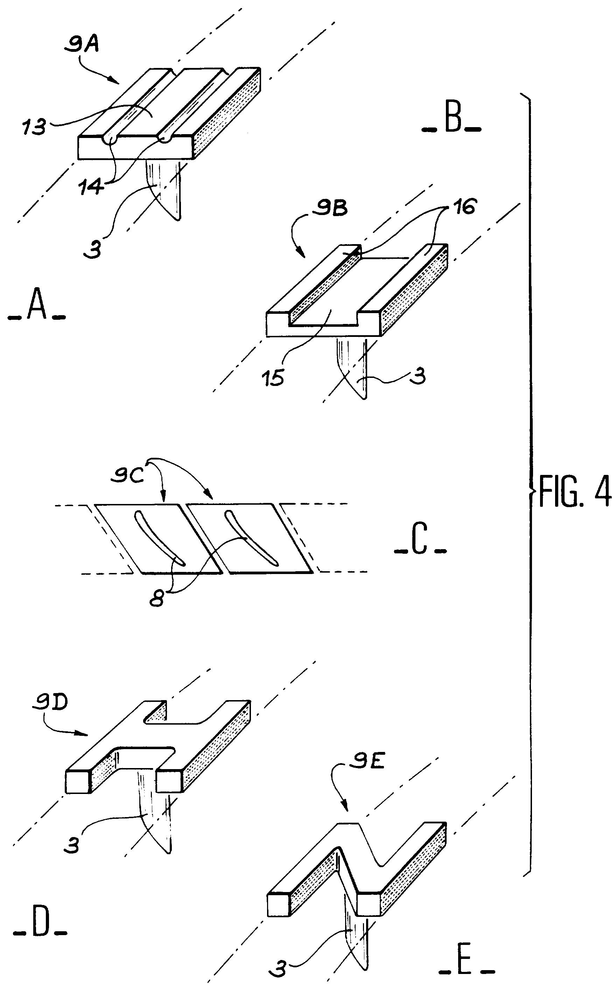

Les figures 4 représentent certaines réalisations particulières de patins, qui ont jusqu'ici été représentés sous forme de plaques d'épaisseur constante. On peut cependant préférer d'avoir un patin 9A (illustré sur la figure 4A) dont la surface de frottement 13 soit entaillée de rainures 14, rectilignes et parallèles, s'allongeant dans le sens de la circonférence de l'étage d'aubes 3, c'est-à-dire le sens de déplacement pendant les vibrations : les rainures 14 présentent comme avantage de recueillir facilement les salissures que les forces centrifuges déposeraient sur la virole 10 et qui pourraient autrement s'introduire entre les surfaces de frottement.

Le patin 9B de la figure 4B présente une forme apparentée, mais avec une seule rainure 15 centrale et si large que la surface de frottement se réduit à deux glissières extrêmes 16.

La figure 4C représente une situation un peu différente où les patins 9C ont une forme de parallélogramme dont les côtés obliques sont sensiblement parallèles aux aubes 3 et à leurs portions de base 8. Cette disposition permet d'obtenir une répartition régulière des frottements.

Le patin 9D de la figure 4D a une forme de H et celui 9E de la figure 4E une forme de N, avec l'aube 3 jointe à la traverse de la lettre H ou N, dont les montants sont aussi dirigés dans la direction de circonférence de l'étage d'aubes 3. Ces deux réalisations et surtout la dernière sont intéressantes à cause de la souplesse des patins 9D et 9E aux déformations de torsion de l'aube 3, qui limite les contraintes qu'ils subissent. Le même avantage de réduction des contraintes pourrait vraisemblablement aussi être obtenu pour d'autres patins à périmètre entaillé sur toute l'épaisseur.

L'invention peut donc être mise en oeuvre de nombreuses façons dont toutes n'ont pu être mentionnées ici.

## Revendications

1. Etage d'aubes (3) encastrées dans un anneau (5) à une portion de base (8) et libres à une extrémité (7) opposée à la portion de base, où la portion de base est prolongée au-delà de l'anneau, caractérisé en ce que la portion de base est terminée par un patin (9) frottant sur une surface de virole (10) concentrique à l'anneau (5).

2. Etage d'aubes suivant la revendication 1, caractérisé en ce que les patins (9) ou les surfaces de viroles (10) portent un revêtement à frottement réduit.

3. Etage d'aubes suivant l'une quelconque des revendications 1 ou 2, caractérisé en ce qu'un matériau amortissant remplit l'espace (12) entre l'anneau et les surfaces de virole.

4. Etage d'aubes suivant l'une quelconque des revendications 1 à 3, caractérisé en ce que les patins (9) comprennent des régions (11) de recouvrement frottant de patins voisins.

5. Etage d'aubes suivant l'une quelconque des revendications 1 à 4, caractérisé en ce que les patins (9A, 9B) ont une surface de frottement entaillée de rainures (14, 15).

6. Etage d'aubes suivant l'une quelconque des revendications 1 à 5, caractérisé en ce que les patins (9A, 9E) ont un périmètre entaillé.

## Patentansprüche

1. Schaufelstufe (3), wobei die Schaufeln in einem Ring (5) mit einem Grundabschnitt (8) eingesetzt sind und an einem dem Grundabschnitt abgewandten Ende frei sind, an dem der Grundabschnitt über den Ring hinaus verlängert ist,
dadurch **gekennzeichnet,**
daß der Grundabschnitt in einer Platte (9) endet, die auf einer Fläche eines Kranzes (10) schleift, der konzentrisch zu dem Ring (5) ist.

2. Schaufelstufe nach Anspruch 1,
dadurch **gekennzeichnet,**
daß die Platten (9) oder die Flächen der Kränze (10) eine Gleitbeschichtung aufweisen.

3. Schaufelstufe nach einem der Ansprüche 1 oder 2,
dadurch **gekennzeichnet,**
daß ein Dämpfmaterial den Raum (12) zwischen dem Ring und den Flächen des Kranzes füllt.

4. Schaufelstufe nach einem der Ansprüche 1 bis 3,
dadurch **gekennzeichnet,**
daß die Platten (9) Überlappbereiche (11) aufweisen, die an den benachbarten Platten schleifen.

5. Schaufelstufe nach einem der Ansprüche 1 bis 4,
dadurch **gekennzeichnet,**
daß die Platten (9A,9B) eine mit Vertiefungen (14,15) gekerbte Reibfläche aufweisen.

6. Schaufelstufe nach einem der Ansprüche 1 bis 5,
dadurch **gekennzeichnet,**
daß die Platten (9A,9E) eine eingekerbte äußere Begrenzung aufweisen.

## Claims

1. A stage of blades (3) embedded in a ring (5) by way of a root part (8) and free at an end (7) remote therefrom, the root part extending beyond the ring, characterised in that the root part terminates in a shoe (9) rubbing on a surface of a shroud (10) concentric with the ring (5).

2. A stage of blades according to claim 1, characterised in that the shoes (9) or the surfaces of the shroud (10) have a low-friction covering.

3. A stage of blades according to claim 1 or 2, characterised in that a damping material fills the gap (12) between the ring and the shroud surfaces.

4. A stage of blades according to any of claims 1 to 3, characterised in that the shoes (9) have overlap zones (11) rubbing on adjacent shoes.

5. A stage of blades according to any of claims 1 to 4, characterised in that the shoes (9A, 9B) have a rubbing surface notched wth grooves (14, 15).

6. A stage of blades according to any of claims 1 to 5, characterised in that the shoes (9A, 9E) have a notched perimeter.
